# EUROPÄISCHE PATENTSCHRIFT

(11) **EP 4 537 277 B1**
(45) Veröffentlichungstag und Bekanntmachung des Hinweises auf die Patenterteilung: **14.01.2026**
(21) Anmeldenummer: 22765567.7
(22) Anmeldetag: 22.08.2022
(51) Int. Cl.: G06Q 10/10

(54) **COMPUTERIMPLEMENTIERTES VERFAHREN UND COMPUTERPROGRAMMPRODUKT**
COMPUTER-IMPLEMENTED METHOD AND COMPUTER PROGRAM PRODUCT
PROCÉDÉ MIS EN OEUVRE PAR ORDINATEUR ET PRODUIT PROGRAMME D'ORDINATEUR

(43) Veröffentlichungstag der Anmeldung: 16.04.2025
(73) Patentinhaber: TAXY.IO GMBH, 52070 Aachen (DE)
(72) Erfinder: KIRCH, Daniel Hubert Friedrich, 50823 Köln (DE); KIRCHHOFF, Steffen, 50676 Köln (DE); PEPER, Sven, 52072 Aachen (DE)
(74) Vertreter: Kohlmann, Kai
(86) Internationale Anmeldenummer: PCT/EP2022/073303
(87) Internationale Veröffentlichungsnummer: WO 2024/041717

(56) Entgegenhaltungen:
- JIMMY LIN ET AL: "Pretrained Transformers for Text Ranking: BERT and Beyond", ARXIV.ORG, CORNELL UNIVERSITY LIBRARY, 201 OLIN LIBRARY CORNELL UNIVERSITY ITHACA, NY 14853, 13 October 2020 (2020-10-13), XP081785445
- JO\~AO DIAS ET AL: "State of the Art in Artificial Intelligence applied to the Legal Domain", ARXIV.ORG, CORNELL UNIVERSITY LIBRARY, 201 OLIN LIBRARY CORNELL UNIVERSITY ITHACA, NY 14853, 10 March 2022 (2022-03-10), XP091188300

## Beschreibung

Die Erfindung betrifft ein computerimplementiertes Verfahren und ein Computerprogrammprodukt zur Ermittlung von relevanten Antwortpassagen aus einem Antwortkorpus zu einer einen rechtlichen Sachverhalt betreffenden Anfrage.

Eine der größten Herausforderungen der Rechtsberatung, insbesondere auch in der Steuerberatung, ist die schiere Informationsflut, der sich eine Beraterin oder ein Berater ausgesetzt sieht. Dabei sind zum einen die regulatorischen Informationen zu nennen, also Gesetze, Urteile, Erlasse, Kommentare etc., auf deren Grundlage Rechts- bzw. Steuerberatung für Mandanten stattfindet, und zum anderen die Daten, die einen Mandanten charakterisieren - von Stammdaten über Zahlungsflüsse bis hin zu Kommunikationsdaten.

Damit ein Rechtsberater, insbesondere Rechtsanwalt oder Steuerberater, seinen Mandanten beraten kann, muss er in erster Linie das jeweilige Rechtsgebiet verstehen und verinnerlichen. Das erfindungsgemäße Verfahren bezieht sich auf die automatisierte Verarbeitung von (steuer-)rechtlich relevanter Literatur, wie die Analyse von (steuer-) rechtlichen Dokumenten, insbesondere Gesetzen und Urteile, wie diese zusammenhängen und welche Gewichtungen (Rankings) diese untereinander haben, die Themenerkennung in Urteilen, Gesetzen, Abschnitten von Gutachten und anderen juristischen Dokumenten und die Erkennung wichtiger Entitäten in einem Text, wie handelnde juristische oder natürliche Personen, wichtige Orte, Berufe, Daten, Werte und die Erkennung von Referenzen in juristischen Texten.

Das computerimplementierte Verfahren greift dabei auf einen Antwortkorpus an möglichen Antwortpassagen zu Anfragen zurück, die einen rechtlichen Sachverhalt betreffen. Der Antwortkorpus umfasst einen Fundus von digitalen juristischen Dokumenten, wie z.B. Gesetze, Urteile, Kommentare und kanzleieigene Dokumente des Nutzers des Verfahrens.

Die Anfrage zu dem rechtlichen Sachverhalt, d.h. der Trigger für die Ermittlung der relevanten Antwortpassagen, ist in der Regel eine Textstelle mit einen (steuer-)rechtlichen Sachverhalt als Sachverhaltsbeschreibung in einem mit einer Textverarbeitung erstellten Dokument oder einer E-Mail mit einer Mandantenanfrage. Die möglichen Antworten stammen aus dem Anwortkorpus.

Aus dem Stand der Technik sind bereits Ansätze zur Ermittlung von relevanten Antwortpassagen zu rechtlichen Fragestellungen bekannt:
Aus "Legal question answering by deep learning", Lu Liu and Jing Luo, Lecture Notes in Computer Science Lect. Notes Computer, 20180706 Springer, Berlin, Heidelberg, vol. 10956 Chap.19, no. 558, 173 - 181 ist ein Verfahren zur Beantwortung juristischer Fragen bekannt, welches eine Wortsegmentierung und Schlüsselwortauswahl umfasst, gefolgt von einem Deep-Learning-Algorithmus, um die juristische Frage zu beantworten.

Legal Question Answering using Ranking SVM and Deep Convolutional Neural Network, Phong-Khac Do and Huy-Tien Nguyen and Chien-Xuan Tran and Minh-Tien Nguyen and Minh-Le Nguyen, (https://doi.org/10.48550/arXiv.1703.05320 - abgerufen am 8.08.2022) offenbart eine Methode zur Beantwortung von Rechtsfragen. Zunächst werden relevante juristische Informationen durch ein Ranking juristischer Artikel ermittelt. Dann wird ein neuronales Netz eingesetzt, um die Frage auf der Grundlage der am besten bewerteten Artikel zu beantworten.

Applying a Convolutional Neural Network to Legal Question Answering, Mi-Young Kim, Ying Xu, Randy Goebel, Otake M., Kurahashi S., In: Ota Y., Satoh K., Bekki D. (eds) New Frontiers in Artificial Intelligence. JSAI-isAI 2015. Lecture Notes in Computer Science, vol 10091. Springer, Cham., 282-294, offenbart ein Verfahren zum Auffinden von Antworten auf juristische Fragen. In einer ersten Phase werden juristische Artikel nach ihrer Relevanz geordnet, und in einer zweiten Phase wird die Frage beantwortet, indem die relevanten Artikel mit den extrahierten Bedeutungen der Anfrage verglichen werden.

Die US 2019/0188262 A1 beschreibt Systeme und Verfahren zur Beantwortung von Fragen in natürlicher Sprache mit Hilfe neuronaler Netze. Die Antworten werden in der Reihenfolge ihrer Relevanz für die Anfrage geordnet.

Die CN 110688452 A offenbart ein Verfahren und ein System zur Bewertung der semantischen Ähnlichkeit von Texten, z.B. juristischen Texten, umfassend die Bestimmung der Trainingsdaten als Eingabe für das neuronale Netz, Training des semantischen Textähnlichkeitsmodells und Eingabe einer Anfrage in das semantische Vektormodell, um ein Textsuchergebnis zu erhalten.

JIMMY LIN ET AL: "Pretrained Transformers for Text Ranking: BERT and Beyond", ARXIV.ORG, CORNELL UNIVERSITY LIBRARY, ITHACA, NY 14853, 13. Oktober 2020, XP081785445 offenbart ein Text Ranking, welches die Erstellung einer geordneten Liste von Texten aus einem Korpus als Antwort auf eine Anfrage zum Ziel hat. Ein Schwerpunkt liegt auf der Anwendung von "Transformern" wie BERT für diese Aufgabe. Im Abschnitt "3 Multi-Stage Ranking Architectures" (Mehrstufige Ranking-Architekturen) wird ein zweistufiges Verfahren zur Ermittlung relevanter Textpassagen offenbart. In einer ersten Stufe wird eine Ranglisten-Funktion, wie beispielsweise BM25, eingesetzt, um eine Einschätzung der Relevanz von Antwortpassagen für die gestellte Anfrage vorzunehmen. In einer zweiten Stufe, dem Reranking (Neusortierung) werden die in der ersten Stufe generierten Kandidaten in absteigender Relevanz neu sortiert. Hierfür werden neurale Ranking-Modelle, insbesondere solche, die auf BERT basieren eingesetzt. Als Beispiel für ein Modell wird das monoBERT-Modell genannt. Das monoBERT-Modell erhält sowohl die Anfrage als auch den Kandidatentext gemeinsam und gleichzeitig als Input. Das Modell verarbeitet diesen kombinierten Input und gibt einen Relevanzwert aus. Das Training von BERT-Modellen (einschließlich monoBERT) erfolgt typischerweise in einem zweistufigen Prozess aus Vortraining (pre-training) und Feinabstimmung (fine-tuning).

DIAS, JOAO ET AL. (2022, März 10). "State of the Art in Artificial Intelligence applied to the Legal Domain." ARXIV.ORG, CORNELL UNIVERSITY LIBRARY, 201 OLIN LIBRARY CORNELL UNIVERSITY ITHACA, NY 14853. XP091188300 beschreibt Sentence-BERT (SBERT) als ein semantisch modifiziertes vortrainiertes BERT-Modell. SBERT verwendet Siamese- und Triplet-Netzwerkstrukturen, um semantisch relevante SatzEinbettungen zu extrahieren. Vektor-Einbettungen werden anschließend mithilfe der Kosinus-Ähnlichkeit verglichen, um ihre Ähnlichkeit zu bestimmen.

Ausgehend von diesem Stand der Technik liegt der Erfindung die Aufgabe zugrunde ein computerimplementiertes Verfahren und eine Computerprogrammprodukt der eingangs erwähnten Art zu schaffen, das trotz Verwendung eines semantischen Sprachmodells, welches Textpassagen kontextsensitiv in hochdimensionale Vektorräume einbettet, mit relativ geringen Hardware-Ressourcen und mit hoher Geschwindigkeit relevante Antwortpassagen ermitteln kann, wobei zugleich in kurzer Zeit ein für die Anwendung des Verfahrens erforderlicher Antwortkorpus mit einer hohen Anzahl von Antwortpassagen bereitgestellt oder aktualisiert werden kann.

Diese Aufgabe wird durch ein computerimplementiertes Verfahren mit den Merkmalen des Anspruchs 1 und ein Computerprogrammprodukt mit den Merkmalen des Anspruch 5 gelöst. Vorteilhafte Ausgestaltungen der Erfindung ergeben sich aus den Merkmalen der abhängigen Ansprüche.

Um die Anzahl möglicher Kandidaten der Antwortpassagen und damit die erforderliche Rechenleistung zu reduzieren, wird in einem ersten Schritt eine Ranglisten-Funktion angewendet, um die Relevanz der Antwortpassagen für die Anfrage abzuschätzen und eine Liste mit einer festen Anzahl möglicher Kandidaten der Antwortpassagen zu ermitteln. Die feste Anzahl ist eine Teilmenge der Gesamtzahl der möglichen Antwortpassagen, beispielsweise der besten 10.000 Kandidaten. Die feste Anzahl kann durch einen festen Prozentsatz, beispielsweise von 5, 10 oder 25 % der möglichen Antwortpassagen festgelegt werden.

Zur Ermittlung der Relevanz kommt insbesondere die OKAPI BM 25 Funktion zum Einsatz. Bei der Informationssuche ist Okapi BM25 (BM ist eine Abkürzung für Best Matching) eine Ranking-Funktion, die von Suchmaschinen verwendet wird, um die Relevanz von Dokumenten für eine bestimmte Suchanfrage einzuschätzen. Okapi BM 25 ist eine Bag-of-Words- Retrieval-Funktion, die eine Reihe von Dokumenten basierend auf den in jedem Dokument vorkommenden Suchbegriffen einordnet, unabhängig von ihrer Nähe innerhalb des Dokuments.

Trotz Verwendung eines semantischen Sprachmodells, welches Textpassagen kontextsensitiv in hochdimensionale Vektorräume einbettet, kann das erfindungsgemäße Verfahren mit relativ geringer Rechenleistung und Hardware-Ressourcen betrieben werden, weil die Antwortpassagen erst im Sortierschritt 1.2 on-the-fly, d.h. in Echtzeit vektorisiert werden und wenn mit der Ranglistenfunktion die fixe Anzahl möglicher Kandidaten der Antwortpassagen bereits deutlich reduziert ist. Die erfindungsgemäß vorgesehene on-the-fly Vektorisierung hat mehrere Vorteile:
1. In dem Antwortkorpus liegen sämtliche Antwortpassagen vektorfrei indiziert vor. Hierdurch lassen sich die erforderlichen Hardware-Ressourcen deutlich reduzieren, weil das Speichern der hochdimensionalen Vektoren im Index viel Speicherplatz verbrauchen würde.
2. Des Weiteren wird die benötigte Zeit für die Indexierung des Antwortkorpus erheblich reduziert, weil während der Indizierung keine rechenintensiven Vektorisierungsoperationen auf Antwortpassagen durchgeführt werden müssen. Durch das Bereitstellen vektorfrei indizierter Antwortpassagen kann daher in kurzer Zeit ein für die Anwendung des Verfahrens erforderlicher Antwortkorpus mit einer hohen Anzahl von Antwortpassagen enthaltenden Teildokumenten, z.B. mehreren Millionen, mit relativ geringer Rechenleistung bereitgestellt werden.
3. Schließlich können Modellverbesserungszyklen deutlich schneller implementiert werden, da Modellverbesserungen flexibel innerhalb kürzester Zeit installiert und damit dem Nutzer zugänglich gemacht werden können, da keine Vektoren berechnet werden müssen. Auch ein A/B-Test ist einfach möglich, bei dem das aktuelle Modell bspw. noch in 80% der Anfragen benutzt wird und ein neues, verbessertes Modell zunächst bei 20% der Anfragen getestet und evaluiert wird. Würde man die Vektoren aller indizierten Antwortpassagen vorberechnet im Index des Antwortkorpus speichern, müsste man bei neuen Modellen jede Antwortpassage im Index aktualisieren. Dieser Vorgang kann in der Praxis mehrere Wochen oder Monate dauern, insbesondere dann, wenn das System nicht in der Cloud sondern in Rechenzentren beim Nutzer installiert wird und mit realistischen Indexgrößen von mehreren Hundert Millionen Teildokumenten betrieben wird.

Nach dem Sortieren der besten Kandidaten innerhalb der im ersten Schritt mit der Ranglistenfunktion ermittelten Liste mit Hilfe des mindestens eines semantischen Sprachmodells des maschinellen Lernens erfolgt das Ausgeben der besten Kandidaten in Form einer Liste mit absteigender Relevanz der Antwortpassagen. Abhängig von der Anfrage und dem vorhandenen Antwortkorpus kann die Liste lediglich eine Antwortpassage, im Extremfall auch keine Antwortpassage enthalten.

Zum Bereitstellen des Antwortkorpus werden juristische Dokumente in Teildokumente mit jeweils einer Antwortpassage zerlegt und die Antwortpassagen werden vektorfrei indiziert.

Die juristischen Dokumente umfassen z.B. Primärliteratur, wie z.B. Gesetze und Urteile, Sekundärliteratur, wie z.B. Kommentare von Verlagen sowie Tertiärliteratur, wie z.B. Kanzleischriftstücke (Gutachten, E-Mails) des Nutzers.

Die juristischen Dokumente der Primär- und Sekundärliteratur stammen aus externen Datenbanken. Die juristischen Dokumente der Tertiärliteratur stammen insbesondere aus Softwaresystemen des Nutzers des Verfahrens.

Das mindestens eine semantische Sprachmodell des maschinellen Lernens ist ein Sprachmodell, welches Textpassagen kontextsensitiv in hochdimensionale Vektorräume einbettet, um semantische Ähnlichkeiten in zu vergleichenden juristischen Texten und/oder semantische Ähnlichkeiten von Anfragen und Antworten aus dem Antwortkorpus zu ermitteln.

Insbesondere das kontextsensitive Einbetten von gesamten Textpassagen in hochdimensionale Vektorräume verbessert die Antwortqualität des Verfahrens ggü. Verfahren, bei denen nur einzelne Wörter eingebettet werden, und zwar unabhängig vom Kontext immer auf denselben Vektor.

Ein semantisches Sprachmodell ist zum Beispiel BERT. Das Akronym BERT steht für Bidirectional Encoder Representations from Transformers. Es handelt sich um eine von Google entwickelte und im Jahr 2018 vorgestellte Technik des maschinellen Lernens und Pretrainings von Transformer-basierten Natural-Language-Processing-Modellen (NLP-Modelle). Mit BERT trainierte Sprachmodelle erfassen die kontextuellen Zusammenhänge und Beziehungen der Wörter besser. BERT arbeitet bidirektional und verwendet künstliche neuronale Netze. Im Kern basiert BERT auf Transformer-Sprachmodellen mit einer bestimmten Anzahl an Encoder- und Decoder-Schichten und Selbstaufmerksamkeitsmechanismen. Die für BERT-Modelle verwendeten tiefen neuronalen Netzwerke (Deep Neural Networks - DNNs) bestehen aus vielen Neuronen-Schichten und können komplexe Zusammenhänge abbilden.

Bei Satzpaar-Regressionsaufgaben wie der semantischen Textähnlichkeit (STS) ist es erforderlich, dass beide Sätze bzw. Textpassagen in das Netzwerk eingespeist werden, was einen massiven Rechenaufwand verursacht, der um das ähnlichste Paar in einer Sammlung von 10.000 Sätzen zu finden etwa 50 Millionen Inferenzberechnungen (~65 Stunden) mit BERT erfordert.

Für die Erfindung wird daher Sentence-BERT (SBERT), eine Modifikation des vortrainierten BERT Sprachmodells, verwendet, das siamesische und triolische Netzwerkstrukturen verwendet, um semantisch sinnvolle Satzeinbettungen abzuleiten, die mit Hilfe von Cosinus-Ähnlichkeit verglichen werden können. Dies reduziert den Aufwand für die Suche nach dem ähnlichsten Paar von 65 Stunden mit BERT auf etwa 5 Sekunden mit SBERT, wobei die Genauigkeit von BERT erhalten bleibt.

Als Trainingsdaten für das Pretraining dienen allgemeine Texte sowie juristische Fachtexte, um dem System ein allgemeines Sprachverständnis unter Berücksichtigung der juristischen Fachsprache anzutrainieren. Als allgemeine Texte für ein in deutscher Sprache trainiertes System dienten Wikipedia-Texte (www.wikipedia.de) mit mehr als einer Milliarde Datensätzen. Als juristische Fachtexte wurde auf bundesdeutsche Gesetze (www.gesetze-im-internet.de), Urteile, juristische Primärliteratur (www.rechtsprechung-im-internet.de), Europäische Gesetze und Urteile (https.://eur-lex.europa.eu) sowie Österreichische Gesetze und Urteile (https://www.ris.bka.gv.at) zurückgegriffen, insgesamt etwa 2 Millionen Datensätze. Der Pretraining-Schritt beruht auf überwachtem Lernen.

Im Anschluss an das Pretraining findet ein Finetuning-Schritt für die spezifische Aufgabenstellung im rechtlichen Bereich mit einer kleineren Menge an Datensätzen, z.B. etwa 500.000 Datensätzen, statt. Als Trainingsdaten werden insbesondere Datensätze mit Frage-Antwort-Paaren zu juristischen Sachverhalten sowie Anfragen zu einem rechtlichen Sachverhalt und die aus den Datensätzen zu den Anfragen ausgegebenen Antwortpassagen mit Nutzerbewertungen verwendet. Nutzerbewertungen sind Trainingsdaten, die dem laufenden System als Trainingsdaten hinzugefügt werden. Der Finetuning-Schritt erfolgt im Wege des überwachten Lernen mit den Fragen und den Antworten der Frage- Antwort-Paare.

In der nachfolgenden Tabelle sind die Trainingsdaten für das Pretraining in Zeilen 1,2 die Trainingsdaten für den Finetuning-Schritt in Zeile 3 dargestellt:

### Tabelle zu Trainingsdaten:

| Nr. | Typ | Anzahl Datensätze | Bemerkung |
|---|---|---|---|
| 1 | Allgemeine Texte aus der deutschen Sprache wie | > 1 Mrd. | www.wikipedia.de, etc. |
| | Deutsche Wikipedia und andere Nachrichten-Seiten | | |
| 2 | Juristische Fachtexte wie | ca. 2 Mio. | |
| | Bundesdeutsche Gesetze, Urteile, juristische Primärliteratur | | www.gesetze-im-internet.de www.rechtsprechung-im-internet.de |
| | Europäische Gesetze, Urteile | | https://eur-lex.europa.eu/ |
| | Österreichische Gesetze und Urteile | | https://www.ris.bka.gv. at/ |
| 3 | Frage-Antwort-Korpus | ca. 500 Tsd. | |
| | Frage-Antwort-Paare (DE) | | Vom Anbieter des Verfahrens erstellt oder über Dritte bezogen, z.B. Deubner: Frag einen Anwalt |
| | Nutzer-Feedback zu Antwort-Vorschlägen (DE, AT) | | Die Nutzer bewerten Antwortvorschläge, z.B. durch Klicken auf Daumen hoch/Daumen runter. |

Neben BERT sind die transformer-basierten Sprachmodelle GPT-2/GPT-3 bekannt:
Generative Pre-trained Transformer 2 ( GPT-2 ) ist ein Modell, welches u.a. Fragen beantworten und Passagen zusammenfassen kann. Das Modell wurde nicht speziell für diese Aufgaben ausgebildet, und seine Fähigkeit, sie auszuführen, ist eine Erweiterung seiner allgemeinen Fähigkeit, das nächste Element in einer beliebigen Reihenfolge genau zu synthetisieren. Die GPT-Architektur implementiert ein tiefes neuronales Netzwerk , insbesondere wird ein Transformer-Modell verwendet.

Aufmerksamkeitsmechanismen ermöglichen es dem Modell, sich selektiv auf Segmente des Eingabetexts zu konzentrieren, die es als die relevantesten vorhersagt.

Generative Pre-trained Transformer 3( GPT-3) ist das Sprachvorhersagemodell der dritten Generation in der GPT-n-Serie und dem Nachfolger von GPT-2.

Ein weiteres Sprachmodell für das kontextsensitive Einbetten von gesamten Passagen in hochdimensionale Vektorräume ist Universal Sentence Encoder (USE) von Google. Die hochdimensionalen Vektoren können u.a. für die Textklassifizierung und zur Ermittlung semantischer Ähnlichkeiten in natürlicher Sprache verwendet werden.

Das computerimplementierte Verfahren wird insbesondere durch ein Computerprogrammprodukt ausgeführt, das bei der Ausführung des Programms durch einen Computer diesen veranlassen, die vorstehend beschriebenen Schritte des computerimplementierten Verfahrens auszuführen.

Um einen Systembruch im Nutzererlebnis und damit einen effizienten Prozess zu gewährleisten, kann das Programm zur Ausführung des computerimplementierten Verfahrens in unterschiedliche Office-Anwendungen, wie z.B. Microsoft Word, Microsoft Outlook oder Software von Drittanbietern, wie z.B. Finanz-Software oder Redaktionssysteme integriert werden, die der Nutzer ohnehin verwendet. Während der Steuerberater oder Rechtsberater beispielsweise im Textverarbeitungsprogramm Sachverhalte formuliert oder im Postfach von Microsoft Outlook Mandanten E-Mails eingehen, analysiert das erfindungsgemäße, als Software realisierte computerimplementierte Verfahren die Inhalte semantisch, durchsucht den Antwortkorpus und schlägt in einer für die Software vorgesehenen Anzeigeleiste in der Office-Anwendung innerhalb weniger Sekunden passende Antwortpassagen vor, die gegebenenfalls von dem Berater (Nutzer) unmittelbar in eine Antwort an den Mandanten übernommen werden können.

Der Berater(Nutzer) spart erheblich Zeit bei der Recherche und Analyse eines rechtlichen Sachverhalts und kann seine Arbeitszeit produktiv nutzen. Des Weiteren verfügt der Berater automatisch stets über sämtliche Fachinformation auf dem neuesten Stand der das Verfahren implementierenden Software.

## Patentansprüche

1. Computerimplementiertes Verfahren zur Ermittlung von relevanten Antwortpassagen aus einem vektorfrei indizierte Antwortpassagen enthaltenden Antwortkorpus zu einer einen rechtlichen Sachverhalt betreffenden Anfrage, umfassend die folgenden Schritte:
1.1 Anwenden einer Ranglisten-Funktion, um die Relevanz der Antwortpassagen für die Anfrage abzuschätzen und eine Liste mit einer festen Anzahl möglicher Kandidaten der Antwortpassagen zu ermitteln,
1.2 Sortieren der besten Kandidaten innerhalb der Liste mit absteigender Relevanz mit Hilfe mindestens eines semantischen Sprachmodells des maschinellen Lernens, welches Textpassagen kontextsensitiv in hochdimensionale Vektorräume einbettet, um semantische Ähnlichkeiten von Anfragen und Antworten aus dem Antwortkorpus zu ermitteln, wobei die Anfrage und die mit der Ranglistenfunktion ermittelten Antwortpassagen erst während des Sortierens in Echtzeit durch das mindestens eine semantische Sprachmodell vektorisiert werden, wobei das mindestens eine semantische Sprachmodell Sentence-BERT ist, welches siamesische und triolische Netzwerkstrukturen verwendet, um semantisch sinnvolle Satzeinbettungen abzuleiten, die mit Hilfe von Cosinus-Ähnlichkeiten verglichen werden können, wobei das mindestens eine semantische Sprachmodell zuvor in einem zweistufigen Prozess trainiert wird:
- in einem ersten Pretraining-Schritt wird dem semantischen Sprachmodell auf der Basis von allgemeinen Texten sowie juristischen Fachtexten ein allgemeines Sprachverständnis unter Berücksichtigung der juristischen Fachsprache antrainiert,
- in einem zweiten Finetuning-Schritt lernt das semantische Sprachmodell mit Hilfe von Trainingsdaten, die Fragen und Antworten zu rechtlichen Sachverhalten enthalten, die Relevanz von möglichen Antworten zu den Fragen zu berechnen, um relevante Antwortpassagen im Antwortkorpus zu finden,
und
1.3 Ausgeben der besten Kandidaten in Form einer Liste mit absteigender Relevanz der Antwortpassagen.

2. Computerimplementiertes Verfahren nach Anspruch 1,
**dadurch gekennzeichnet, dass** zum Bereitstellen des Antwortkorpus juristische Dokumente in Teildokumente mit jeweils einer Antwortpassage zerlegt und die Antwortpassagen vektorfrei indiziert werden.

3. Computerimplementiertes Verfahren nach Anspruch 2,
**dadurch gekennzeichnet, dass** die juristischen Dokumente aus externen Datenbanken stammen.

4. Computerimplementiertes Verfahren nach Anspruch 2,
**dadurch gekennzeichnet, dass** die externen Datenbanken Softwaresysteme des Nutzers des Verfahrens sowie Datenbanken Dritter mit anonymisierten Frage-Antwort-Paaren umfassen.

5. Computerprogrammprodukt, umfassend Befehle, die bei der Ausführung des Programms durch einen Computer diesen veranlassen, das Verfahren nach einem der Ansprüche 1 bis 4 auszuführen.

6. Computerprogrammprodukt nach Anspruch 5, **dadurch gekennzeichnet, dass** es Bestandteil einer Software-Anwendung ist, die ein Nutzer zur Beantwortung von Anfragen zu rechtlichen Sachverhalten verwendet.

7. Computerprogrammprodukt nach Anspruch 6, **dadurch gekennzeichnet, dass** es Bestandteil einer Office-Anwendung ist.

## Claims

1. Computer-implemented method for identifying relevant response passages from a corpus of responses to a query relating to a legal matter, containing vector-free indexed response passages, comprising the following steps:
1.1 applying a ranking list function to estimate the relevance of the response passages for the query and determining a list with a fixed number of possible candidates for the response passages,
1.2 sorting the best candidates within the list in descending order of relevance using at least one semantic language model of machine learning, which text passages are embedded in a context-sensitive manner in high-dimensional vector spaces in order to determine semantic similarities of queries and responses from the corpus of responses, wherein the query and the response passages determined with the ranking list function are only vectorized during sorting in real time by the at least one semantic language model, wherein the at least one semantic language model is Sentence-BERT which uses Siamese and triplet network structures in order to derive semantically meaningful sentence embeddings which can be compared with the aid of cosine similarities, wherein the at least one semantic language model is previously trained in a two-stage process:
- in a first pre-training step, the semantic language model is trained to have a general understanding of language based on general texts as well as legal texts, taking into account legal terminology,
- in a second fine-tuning step, the semantic language model learns to calculate the relevance of possible responses to the queries using training data containing questions and answers to legal matters in order to find relevant response passages in the corpus of responses,
and
1.3 outputting the best candidates in the form of a list with descending relevance of the response passages.

2. Computer-implemented method according to Claim 1, **characterized in that**, for the provision of the corpus of responses, legal documents are broken down into sub-documents, each containing a response passage, and the response passages are indexed vector-free.

3. Computer-implemented method according to Claim 2, **characterized in that** the legal documents originate from external databases.

4. Computer-implemented method according to Claim 2, **characterized in that** the external databases comprise software systems of the user of the method as well as databases of third parties with anonymized question-answer pairs.

5. Computer program product comprising instructions which, when the program is executed by a computer, cause it to execute the method according to any one of Claims 1 to 4.

6. Computer program product according to Claim 5, **characterized in that** it is part of a software application which a user uses to answer inquiries about legal matters.

7. Computer program product according to Claim 6, **characterized in that** it is part of an office application.

## Revendications

1. Procédé mis en œuvre par ordinateur, pour déterminer des passages de réponses pertinents à partir d'un corpus de réponses contenant des passages de réponses indexés sans vecteur à une demande concernant une situation juridique, comprenant les étapes suivantes, consistant à :
1.1 appliquer une fonction de listes de classement, pour estimer la pertinence des passages de réponses à la demande et déterminer une liste d'un nombre fixe de candidats possibles parmi les passages de réponses,
1.2 trier les meilleurs candidats au sein de la liste, avec une pertinence décroissante à l'aide d'au moins un modèle linguistique sémantique de l'apprentissage automatique, lequel incorpore contextuellement des passages de textes dans des espaces vectoriels à hautes dimensions, pour déterminer à partir du corpus de réponses des analogies sémantiques de demandes et de réponses, la demande et les passages de réponses déterminés à l'aide de la fonction de listes de classement n'étant vectorisés que pendant le tri en temps réel par l'au moins un modèle linguistique sémantique, l'au moins un modèle linguistique sémantique étant Sentence-BERT, lequel utilise des structures en réseau siamoises et trioliques pour déduire des incorporations de phrases judicieuses du point de vue sémantique, qui peuvent être comparées à l'aide de similitudes de cosinus, l'au moins un modèle linguistique sémantique étant entraîné précédemment lors d'un processus en deux cycles :
- dans une première étape de pré-entraînement, le modèle linguistique sémantique est entraîné sur la base de textes généraux et de textes juridiques techniques à une compréhension linguistique générale, sous considération du jargon juridique,
- dans une deuxième étape de réglage fin, à l'aide de données d'entraînement, qui contiennent des questions et des réponses concernant des situations juridiques, le modèle linguistique sémantique apprend à calculer la pertinence de réponses possibles aux questions, pour trouver des passages de réponses pertinents dans le corpus de réponses,
et
1.3 éditer les meilleurs candidats sous la forme d'une liste à pertinence décroissante des passages de réponses.

2. Procédé mis en œuvre par ordinateur selon la revendication 1, **caractérisé en ce que** pour mettre à disposition le corpus de réponses, des documents juridiques sont décomposés en des documents partiels avec chacun un passage de réponse et les passages de réponses sont indexés sans vecteur.

3. Procédé mis en œuvre par ordinateur selon la revendication 2, **caractérisé en ce que** les documents juridiques proviennent de bases de données externes.

4. Procédé mis en œuvre par ordinateur selon la revendication 2, **caractérisé en ce que** les bases de données externes comprennent des systèmes logiciels de l'utilisateur du procédé, ainsi que des bases de données de tiers avec des paires de questions-réponses anonymisées.

5. Produit de programme informatique, comprenant des ordres, qui lors de l'exécution du programme par un ordinateur incitent celui-ci à exécuter le procédé selon l'une quelconque des revendications 1 à 4.

6. Produit de programme informatique selon la revendication 5, **caractérisé en ce qu'**il est partie intégrante d'une application logicielle qu'un utilisateur emploie pour répondre à des demandes concernant des situations juridiques.

7. Produit de programme informatique selon la revendication 6, **caractérisé en ce qu'**il est partie intégrante d'une application Office.
